# EUROPEAN PATENT SPECIFICATION

(11) **EP 2 840 822 B1**
(45) Date of publication and mention of the grant of the patent: **30.12.2020**
(21) Application number: 12874740.9
(22) Date of filing: 25.06.2012
(51) Int. Cl.: H04L 29/06, H04W 12/02, H04W 12/06, H04W 12/08, H04W 88/02, H04W 48/02, G06F 21/74

(54) **CONTROL METHOD AND DEVICE OF MOBILE TERMINAL, AND MOBILE TERMINAL**
STEUERUNGSVERFAHREN UND -VORRICHTUNG EINES MOBILEN ENDGERÄTS SOWIE MOBILES ENDGERÄT
PROCÉDÉ ET DISPOSITIF DE COMMANDE DE TERMINAL MOBILE, ET TERMINAL MOBILE

(30) Priority: 18.04.2012 CN 201210114530
(43) Date of publication of application: 25.02.2015
(73) Proprietor: ZTE Corporation, Shenzhen, Guangdong 518057 (CN)
(72) Inventor: LIU, Jiantao, Shenzhen Guangdong 518057 (CN)
(74) Representative: Iannone, Carlo Luigi
(86) International application number: PCT/CN2012/077476
(87) International publication number: WO 2013/155790

(56) References cited:
- WO-A1-2005/109155
- WO-A1-2012/003775
- CN-A- 101 656 965
- CN-U- 201 515 419
- US-A1- 2011 065 375
- US-B2- 7 813 765

## Description

### TECHNICAL FIELD

The disclosure relates to the field of communications, and in particular to a control method and a control device for a mobile terminal, and the mobile terminal.

### BACKGROUND

Along with the increasing popularization of the mobile terminal, the mobile terminal has more and more functions, and thus the mobile terminal has become an essential communication tool for the daily life of a user.

However, with the continuous expansion of a wireless network, the user stores more and more privacy in the mobile terminal, and along with the development of science and technology, there are more and more eavesdropping methods, so that a hacker or a virus may steal information about an individual and a company by controlling the mobile terminal. For example, during a business meeting, if the mobile terminal is carried to a meeting site, although the mobile terminal is set into a silent mode, meeting contents can still be leaked through the mobile terminal, so that the privacy of the individual and secretes of the company are greatly threatened.

The document WO2005/109155A1 relates to a technology of placing personal electronic devices within an aircraft into a flight safe mode so that the personal electronic devices cannot be used at certain times during the flight, especially at take-off and landing.

The document WO2012/003775A1 discloses a control method and a control device which enable a terminal to be switched between a limited operation mode and a normal operation mode by cutting off the power supply for certain hardware in the terminal.

Another document US2011/0065375A1 discloses a similar technology as WO2005/109155A1. It can restrict transmission/receiving function of the mobile devices upon detection of entering defined situations.

### SUMMARY

A technical problem to be solved by the embodiments of the disclosure is to provide a control method and a control device for a mobile terminal, and the mobile terminal, which can effectively ensure the information security of the mobile terminal.

The invention is defined in the appended independent claims.

The embodiments of the disclosure have the following beneficial effects that:
in the above solution, under the security mode, the control device for the mobile terminal performs control processing on the mobile terminal to disable the mobile terminal to transmit the service data to the base station and make the mobile terminal only to receive the external signal. The signal transmission operating function of the mobile terminal is disabled, so that the information security of the mobile terminal can be effectively ensured, and the mobile terminal can be prevented from being freely controlled by a hacker or a virus for eavesdropping and stealing the privacy of an individual or secretes of a company.

### BRIEF DESCRIPTION OF THE DRAWINGS

Fig. 1 is a flowchart of a control method for a mobile terminal according to an embodiment of the disclosure.
Fig. 2 is a structural diagram of a control device for a mobile terminal according to an embodiment of the disclosure.
Fig. 3 is a flowchart of a control method for a mobile terminal according to example 1 of the disclosure.
Fig. 4 is a flowchart of a control method for a mobile terminal according to example 2 of the disclosure.
Fig. 5 is a flowchart of a control method for a mobile terminal according to example 3 of the disclosure.

### DETAILED DESCRIPTION

In order to make clearer the technical problem to be solved by the embodiments of the disclosure, the technical scheme and the advantages, detailed description will be given below with reference to the drawings and specific embodiments.

For the problem that a hacker or a virus may steal information about an individual and a company by controlling a mobile terminal in the relevant art, the embodiments of the disclosure provide a control method and a control device for the mobile terminal as well as the mobile terminal, which can effectively ensure the information security of the mobile terminal.

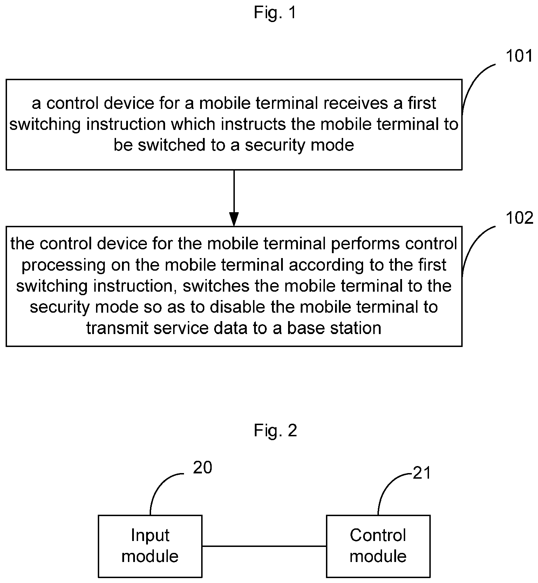

Fig. 1 is a flowchart of a control method for a mobile terminal according to an embodiment of the disclosure, and as shown in Fig. 1, the embodiment includes that:
S101: a control device for the mobile terminal receives a first switching instruction which instructs switching the mobile terminal to a security mode; and
S102: the control device for the mobile terminal performs control processing on the mobile terminal according to the first switching instruction to switch the mobile terminal to the security mode, so as to disable the mobile terminal to transmit service data to a base station.

The first switching instruction may be an instruction input by a user of the mobile terminal, or may be an instruction transmitted to the control device for the mobile terminal by external equipment.

The mobile terminal may be disabled to transmit the service data to the base station through many methods: before transmitting the service data to the base station, the mobile terminal is required to perform a series of processing, such as coding and mapping, on the service data, and a certain step can be interrupted to disable the mobile terminal to transmit the service data to the base station.

Preferably, the control device for the mobile terminal may disable the mobile terminal to transmit the service data to the base station by disabling an uplink service channel of the mobile terminal.

Preferably, the control device for the mobile terminal may prompt, when the mobile terminal receives an external signal, the user whether to switch the mobile terminal from the security mode to a normal mode or not.

Preferably, after prompting the user, the control device for the mobile terminal receives a second switching instruction, input by the user, which instructs switching the mobile terminal to the normal mode; and the control device for the mobile terminal enables the uplink service channel of the mobile terminal according to the second switching instruction, that is switching the mobile terminal to the normal mode.

Preferably, the first switching instruction may carry a password, and the control device for the mobile terminal verifies the password carried by the first switching instruction according to a preset disabling password and disables the uplink service channel of the mobile terminal after the verification succeeds.

Preferably, the second switching instruction may carry a password, and the control device for the mobile terminal verifies the password carried by the second switching instruction according to a preset enabling password and enables the uplink service channel of the mobile terminal after the verification succeeds.

According to the control method for the mobile terminal in the embodiment of the disclosure, under the security mode, the control device for the mobile terminal performs control processing on the mobile terminal to disable the mobile terminal to transmit the service data to the base station, as a result, the mobile terminal only receives the external signal. Since the signal transmission function of the mobile terminal is disabled, the information security of the mobile terminal can be effectively ensured, and the mobile terminal can be prevented from being freely controlled by the hacker or the virus for eavesdropping and stealing the privacy of the individual and the secretes of the company.

Fig. 2 is a structural diagram of a control device for a mobile terminal according to an embodiment of the disclosure, and as shown in Fig. 2, the embodiment includes:
an input module 20, configured to receive a first switching instruction which instructs switching the mobile terminal to a security mode; and
a control module 21, configured to perform control processing on the mobile terminal according to the first switching instruction to switch the mobile terminal to the security mode, so as to disable the mobile terminal to transmit service data to a base station.

Preferably, the control module 21 is configured to disable an uplink service channel of the mobile terminal so as to switch the mobile terminal to the security mode.

Preferably, the control device further includes:
a prompting module, configured to prompt, when the mobile terminal receives an external signal, a user whether to switch the mobile terminal from the security mode to a normal mode or not.

Preferably, the input module 20 is further configured to receive a second switching instruction, input by the user, which instructs switching the mobile terminal to the normal mode; and
the control module 21 is further configured to enable the uplink service channel of the mobile terminal according to the second switching instruction so as to switch the mobile terminal to the normal mode.

Preferably, the first switching instruction carries a password, and
the control module 21 is configured to verify the password carried by the first switching instruction according to a preset disabling password and disable the uplink service channel of the mobile terminal after the verification succeeds.

Preferably, the second switching instruction carries a password, and
the control module 21 is configured to verify the password carried by the second switching instruction according to a preset enabling password and enable the uplink service channel of the mobile terminal after the verification succeeds.

According to the control device for the mobile terminal in the embodiment of the disclosure, under the security mode, the control device for the mobile terminal performs control processing on the mobile terminal to disable the mobile terminal to transmit the service data to the base station, as a result, the mobile terminal only receives the external signal. Since the signal transmission function of the mobile terminal is disabled, the information security of the mobile terminal can be effectively ensured, and the mobile terminal can be prevented from being freely controlled by the hacker or the virus for eavesdropping and stealing the privacy of the individual and the secretes of the company.

The embodiment of the disclosure further provides a mobile terminal, which includes the above-mentioned control device for the mobile terminal.

The control method for the mobile terminal of the disclosure is further described below with reference to specific examples.

### Example 1

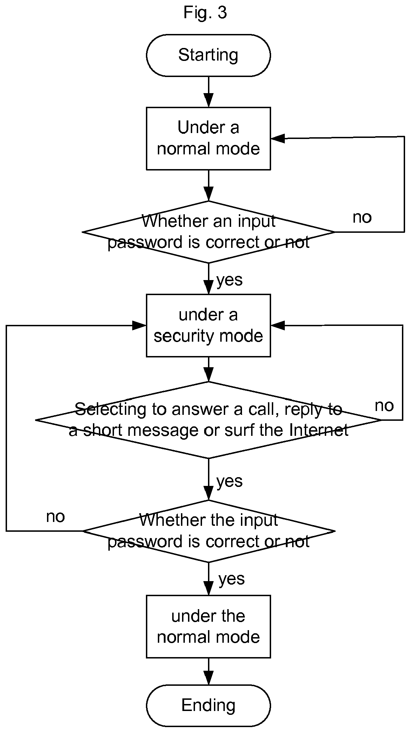

In this example, when the user requires to protect the information security of the mobile terminal, the mobile terminal can be switched to the security mode; and when the user requires to enable the uplink service channel, the mobile terminal is switched to the normal mode. As shown in Fig. 3, the embodiment includes the following steps.

Sa1: the control device in the mobile terminal receives the first switching instruction input by the user, in which the first switching instruction instructs the mobile terminal to be switched to the security mode. Specifically, the control device in the mobile terminal may determine that the user requires to switch the mobile terminal to the security mode according to a key-press operation of the user and switches the mobile terminal to the security mode.

Furthermore, the control device in the mobile terminal may also prompt the user to input a password, verify the password according to a preset disabling password after the user inputs the password, and disable the uplink service channel of the mobile terminal after the password passes verification, and then the mobile terminal is switched to the security mode. If the password input by the user is inconsistent with the preset disabling password, the control device in the mobile terminal does not disable the uplink service channel of the mobile terminal, and the mobile terminal cannot be switched to the security mode.

Sa2: under the security mode, on uplink channels from the mobile terminal to the base station, transmission functions such as voice transmission and data transmission on all service channels, except signalling interaction between the mobile terminal and the base station, are disabled, the mobile terminal is kept in a minimum network access state, only the external signal receiving function is reserved, and the signal transmission function is disabled. When the user needs to make a call, reply to a short message or surf the Internet, the control device in the mobile terminal determines that the user needs to use the uplink service channel according to the key-press operation of the user, and prompts the user whether to switch the mobile terminal from the security mode to the normal mode or not.

Sa3: the user inputs the second switching instruction which instructs the mobile terminal to be switched to the normal mode according to the prompting of the control device in the mobile terminal. Specifically, the control device in the mobile terminal determines that the user needs to switch the mobile terminal to the normal mode according to the key-press operation of the user, and switches the mobile terminal to the security mode.

Furthermore, the control device in the mobile terminal may also prompt the user to input the password. After the user inputs the password, the control device in the mobile terminal verifies the password input by the user according to the preset enabling password, enables the uplink service channel of the mobile terminal after the password passes verification, and switches the mobile terminal to the normal mode. If the password input by the user is inconsistent with the preset enabling password, the control device in the mobile terminal does not enable the uplink service channel of the mobile terminal, and the mobile terminal cannot be switched to the normal mode.

### Example 2

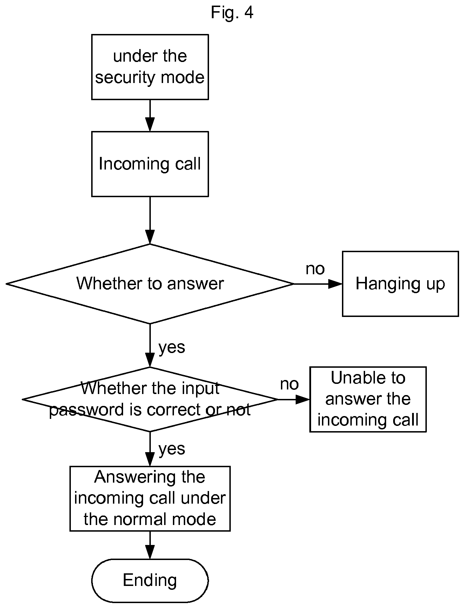

In this example, when the user needs to protect the information security of the mobile terminal, the mobile terminal is switched to the security mode; and when the user needs to answer an incoming call, the mobile terminal is switched to the normal mode. Fig. 4 is a flowchart of receiving an incoming call under the security mode of a mobile terminal, and as shown in Fig. 4, the embodiment includes the following steps.

Sb1: the control device in the mobile terminal controls the mobile terminal to be in the security mode, under which on uplink channels from the mobile terminal to the base station, the function of transmitting voices, data and the like on all service channels, except signalling interaction between the mobile terminal and the base station, is disabled, the mobile terminal is kept in the minimum network access state, only the external signal receiving function is reserved, and the signal transmission function is disabled.

Sb2: the mobile terminal receives an incoming call, and the control device in the mobile terminal displays the incoming call to the user, and prompts the user whether to answer the incoming call or not.

Sb3: upon the user selects to answer the incoming call, the control device in the mobile terminal determines whether the user selects to answer the incoming call or not according to an operation of the user. Specifically, the control device in the mobile terminal determines that the user selects to answer the incoming call according to an answer key pressing operation of the user. Thus, the mobile terminal is required to be switched from the security mode to the normal mode for the user to answer the incoming call, the control device in the mobile terminal prompts the user to input the password, compares the password input by the user with the preset enabling password, and enables the uplink service channel of the mobile terminal to switch the mobile terminal to the normal mode if the password input by the user is consistent with the preset enabling password, as a result, the user can answer the incoming call in the normal mode; and if the password input by the user is inconsistent with the preset enabling password, the user cannot answer the incoming call.

### Example 3

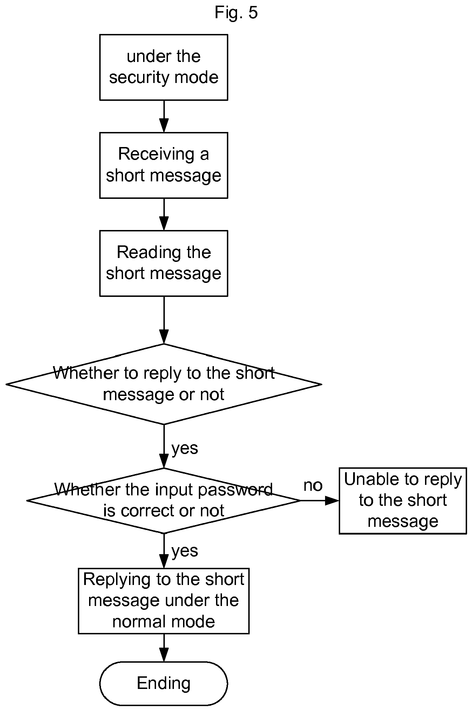

In this example, when the user requires to protect the information security of the mobile terminal, the mobile terminal is switched to the security mode; and when the user needs to reply to a short message, the mobile terminal is switched to the normal mode. Fig. 5 is a flowchart of replying to a received short message under the security mode of a mobile terminal, and as shown in Fig. 5, the embodiment includes the following steps.

Sc1: the control device in the mobile terminal controls the mobile terminal to be in the security mode, under which on uplink channels from the mobile terminal to the base station, the function of transmitting voices, data and the like on all service channels, except signalling interaction between the mobile terminal and the base station, is disabled, the mobile terminal is kept in the minimum network access state, only the external signal receiving function is reserved, and the signal transmission function is disabled.

Sc2: the mobile terminal receives the short message, and the user reads the short message.

Sc3: the control device in the mobile terminal determines whether the user selects to reply to the short message or not according to an operation of the user. Specifically, the control device in the mobile terminal determines that the user selects to reply to the short message according to a short message edition key pressing operation of the user. Thus, the mobile terminal is required to be switched from the security mode to the normal mode for the user to reply to the short message. The control device in the mobile terminal prompts the user to input an enabling password, compares the password input by the user with the preset enabling password, and enables the uplink service channel of the mobile terminal to switch the mobile terminal to the normal mode if the password input by the user is consistent with the preset enabling password, and the user can reply to the short message in the normal mode; and if the password input by the user is inconsistent with the preset enabling password, the user cannot reply to the short message.

### Example 4

In this example, when entering a specific area, the mobile terminal is switched to the security mode; and when the user requires to enable the uplink service channel, the mobile terminal is switched to the normal mode. The embodiment includes the following steps.

Sd1: the control device in the mobile terminal receives the first switching instruction which instructs the mobile terminal to be switched to the security mode. Specifically, when the user enters a specific area such as a meeting room, related equipment in the meeting room transmits the first switching instruction to the control device in the mobile terminal, instructing the mobile terminal to be switched to the security mode.

Sd2: under the security mode, on uplink channels from the mobile terminal to the base station, the function of transmitting voices, data and the like on all service channels, except signalling interaction between the mobile terminal and the base station, is disabled, the mobile terminal is kept in the minimum network access state, only the external signal receiving function is reserved, and the signal transmission function is disabled. When the user needs to make a call, reply to a short message or surf the Internet, the control device in the mobile terminal determines that the user needs to use the uplink service channel according to the key-press operation of the user, and prompts the user whether to switch the mobile terminal from the security mode to the normal mode or not.

Sd3: the user inputs the second switching instruction according to the prompting of the control device in the mobile terminal to make the mobile terminal to be switched to the normal mode. Specifically, the control device in the mobile terminal determines that the user needs to switch the mobile terminal to the normal mode according to the key-press operation of the user, and switch the mobile terminal to the security mode.

Furthermore, the control device in the mobile terminal may also prompt the user to input the password. After the user inputs the password, the control device in the mobile terminal verifies the password input by the user according to the preset enabling password, and enables the uplink service channel of the mobile terminal to switch the mobile terminal to the normal mode after the password passes verification. If the password input by the user is inconsistent with the preset enabling password, the control device in the mobile terminal does not enable the uplink service channel of the mobile terminal, the mobile terminal thus cannot be switched to the normal mode.

According to the disclosure, the mobile terminal can be switched from the normal mode to the security mode. Under the security mode, the control device in the mobile terminal disables the uplink service channel of the mobile terminal to make the mobile terminal only to receive the external signal, and the signal transmission function of the mobile terminal is disabled, so that it is able to prevent an axe-grinding person to steal the secretes of the company or the privacy of the individual through the mobile terminal when the user of the mobile terminal is at a meeting or in another important and secrete place, and thus the information security of the mobile terminal can be effectively protected.

Multiple functional parts described in the specification are called modules, so that the independence of implementation modes for the functional parts is specially emphasized.

In the embodiments of the disclosure, the modules may be implemented as software for the convenient execution of various types of processors. For example, an identified executable code module may include one or more physical or logical blocks of a computer instruction, and may for example be structured into an object, a process or a function. However, executable codes of the identified module may not be physically positioned together, but can include different instructions stored at different bits, and these instructions form the module and implement a specified purpose of the module when being logically combined together.

Actually, the executable code module may be a single instruction or multiple instructions, and may even be distributed on different code segments, in different programs and across multiple pieces of memory equipment. Similarly, operating data may be identified in the module, implemented in any proper way and structured in a data structure of any proper type. The operating data may be collected as a single dataset, or may be distributed at different positions (or at different memory equipments), and may at least partially exist on a system or a network as an electronic signal only.

In the case the module may be implemented by means of software, in consideration of the level of a conventional hardware process, for the module which may be implemented by the software, the skilled in the art may construct a hardware circuit to realize a corresponding function of the module without regard to the cost, in which the hardware circuit includes a conventional Very Large Scale Integrated (VLSI) circuit or a gate array and a conventional semiconductor such as a logic chip and a transistor or other discrete components. The module may also be implemented by means of programmable hardware equipment such as a field programmable gate array, a programmable array logic and programmable logic equipment.

In each method embodiment of the disclosure, the sequence number of each step cannot be intended to limit the sequence of the steps, and for the skilled in the art, changes, without paying creative work, in the sequence of the steps also fall within the scope of protection of the disclosure.

The above are only preferred embodiments of the disclosure, it should be noted that the skilled in the art can make various improvements and elaborations without departing from the disclosure, and these improvements and elaborations shall also fall within the scope of protection of the disclosure.

## Claims

1. A control method for a mobile terminal, comprising:
receiving (101), by a control device for the mobile terminal, a first switching instruction which instructs switching the mobile terminal to a security mode; and
performing (102), by the control device for the mobile terminal, control processing on the mobile terminal according to the first switching instruction to switch the mobile terminal to the security mode, so as to disable the mobile terminal to transmit service data to a base station, wherein
performing, by the control device for the mobile terminal, control processing on the mobile terminal according to the first switching instruction comprises:
disabling, by the control device for the mobile terminal, an uplink service channel of the mobile terminal; and
the control method further comprises:
after disabling, by the control device for the mobile terminal, the uplink service channel of the mobile terminal,
prompting, by the control device for the mobile terminal, a user whether to switch the mobile terminal from the security mode to a normal mode when the mobile terminal receives an external signal from downlink service data of the base station;
**characterized in that** performing, by the control device for the mobile terminal, control processing on the mobile terminal according to the first switching instruction further comprises:
before transmitting, by the mobile terminal, the service data to the base station, interrupting, by the control device for the mobile terminal, a step of a series of processing, performed by the mobile terminal, on the service data.

2. The control method for the mobile terminal according to claim 1, further comprising:
after prompting the user whether to switch the mobile terminal from the security mode to the normal mode,
receiving, by the control device for the mobile terminal, a second switching instruction, input by the user, which instructs switching the mobile terminal to the normal mode; and
enabling, by the control device for the mobile terminal, the uplink service channel of the mobile terminal according to the second switching instruction, so as to switch the mobile terminal to the normal mode.

3. The control method for the mobile terminal according to claim 1, wherein the first switching instruction carries a password, and
wherein disabling, by the control device for the mobile terminal, the uplink service channel of the mobile terminal comprises:
verifying, by the control device for the mobile terminal, the password carried by the first switching instruction according to a preset disabling password, and disabling the uplink service channel of the mobile terminal after the password carried by the first switching instruction passes the verification.

4. The control method for the mobile terminal according to claim 2, wherein the second switching instruction carries a password, and
wherein enabling, by the control device for the mobile terminal, the uplink service channel of the mobile terminal comprises:
verifying, by the control device for the mobile terminal, the password carried by the second switching instruction according to a preset enabling password, and enabling the uplink service channel of the mobile terminal after the password carried by the second switching instruction passes the verification.

5. A control device for a mobile terminal, comprising:
an input module (20), configured to receive a first switching instruction which instructs switching the mobile terminal to a security mode; and
a control module (21), configured to perform control processing on the mobile terminal according to the first switching instruction to switch the mobile terminal to the security mode, so as to disable the mobile terminal to transmit service data to a base station, wherein
the control module (21) is configured to disable an uplink service channel of the mobile terminal so as to switch the mobile terminal to the security mode; and
the control device further comprises:
a prompting module, configured to, when the mobile terminal receives an external signal from downlink service data of the base station, prompt a user whether to switch the mobile terminal from the security mode to a normal mode;
**characterized in that** the control module is further configured to interrupt a step of a series of processing performed by the mobile terminal on the service data before the mobile terminal transmits the service data to the base station.

6. The control device for the mobile terminal according to claim 5, wherein the input module (20) is further configured to receive a second switching instruction, input by the user, which instructs switching the mobile terminal to the normal mode, and
wherein the control module (21) is further configured to enable an uplink service channel of the mobile terminal according to the second switching instruction, so as to switch the mobile terminal to the normal mode.

7. The control device for the mobile terminal according to claim 5, wherein the first switching instruction carries a password, and
wherein the control module is configured to verify the password carried by the first switching instruction according to a preset disabling password and disable the uplink service channel of the mobile terminal after the password carried by the first switching instruction passes the verification.

8. The control device for the mobile terminal according to claim 6, wherein the second switching instruction carries a password, and
wherein the control module is configured to verify the password carried by the second switching instruction according to a preset enabling password and enable the uplink service channel of the mobile terminal after the password carried by the second switching instruction passes the verification.

9. A mobile terminal, comprising the control device according to any one of claims 5 to 8.

## Patentansprüche

1. Steuerverfahren für ein mobiles Endgerät, Folgendes umfassend:
Empfang (101) einer ersten Umschaltanweisung, die durch eine Steuervorrichtung für das mobile Endgerät das Umschalten des mobilen Endgerätes in einen Sicherheitsmodus anweist; und
Durchführen (102) einer Steuerverarbeitung auf dem mobilen Endgerät gemäß dem ersten Schaltbefehl durch die Steuervorrichtung für das mobile Endgerät, um das mobile Endgerät in den Sicherheitsmodus zu schalten und das mobile Endgerät daran zu hindern, Dienstdaten an eine Basisstation zu übertragen, wobei
die Steuerverarbeitung durch die Steuereinrichtung für das mobile Endgerät auf dem mobilen Endgerät gemäß dem ersten Schaltbefehl Folgendes umfasst:
Sperren eines Uplink-Dienstkanals des mobilen Endgerätes durch die Steuervorrichtung für das mobile Endgerät; und
das Steuerverfahren weiter Folgendes umfasst:
nach Deaktivierung des Uplink-Servicekanals des mobilen Endgeräts durch das Steuergerät für das mobile Endgerät,
Anfrage durch das Steuergerät für das mobile Endgerät an einen Benutzer, ob das mobile Endgerät vom Sicherheitsmodus in einen normalen Modus umgeschaltet werden soll, wenn das mobile Endgerät ein externes Signal von Downlink-Servicedaten der Basisstation empfängt;
**dadurch gekennzeichnet, dass** das Durchführen einer Steuerverarbeitung durch die Steuervorrichtung für das mobile Endgerät auf dem mobilen Endgerät gemäß dem ersten Schaltbefehl weiter Folgendes umfasst:
vor der Übertragung der Dienstdaten durch das mobile Endgerät an die Basisstation, wobei durch das Steuergerät für das mobile Endgerät ein Schritt einer Reihe von Verarbeitungsschritten unterbrochen wird, die das mobile Endgerät an den Dienstdaten vornimmt.

2. Steuerungsverfahren für das mobile Endgerät nach Anspruch 1 umfasst weiter Folgendes:
nachdem der Benutzer gefragt wurde, ob das mobile Terminal vom Sicherheitsmodus in den Normalmodus geschaltet werden soll,
Empfang einer zweiten, vom Benutzer eingegebenen Umschaltanweisung durch die Steuervorrichtung für das mobile Endgerät, die das Umschalten des mobilen Endgerätes in den Normalmodus anweist; und
Freigabe des Uplink-Servicekanals des mobilen Endgeräts durch das Steuergerät für das mobile Endgerät gemäß dem zweiten Schaltbefehl, um das mobile Endgerät in den Normalmodus zu schalten.

3. Steuerverfahren für das mobile Endgerät nach Anspruch 1, wobei der erste Schaltbefehl ein Passwort trägt, und
wobei das Sperren des Uplink-Dienstkanals des mobilen Endgerätes durch die Steuervorrichtung für das mobile Endgerät Folgendes umfasst:
Verifizierung des von der ersten Umschaltanweisung geführten Passworts durch das Steuergerät für das mobile Endgerät gemäß einem voreingestellten Sperrpasswort und Sperrung des Uplink-Servicekanals des mobilen Endgeräts, nachdem das von der ersten Umschaltanweisung geführte Passwort die Verifizierung bestanden hat.

4. Steuerverfahren für das mobile Endgerät nach Anspruch 2, wobei der zweite Schaltbefehl ein Passwort trägt, und
wobei die Freigabe des Uplink-Dienstkanals des mobilen Endgerätes durch die Steuervorrichtung für das mobile Endgerät Folgendes umfasst:
Verifizierung des von der zweiten Umschaltanweisung geführten Passworts durch das Steuergerät für das mobile Endgerät entsprechend einem voreingestellten Freigabepasswort und Freigabe des Uplink-Servicekanals des mobilen Endgeräts, nachdem das von der zweiten Umschaltanweisung geführte Passwort die Verifizierung bestanden hat.

5. Steuervorrichtung für ein mobiles Endgerät, bestehend aus:
einem Eingangsmodul (20), das so konfiguriert ist, dass es eine erste Umschaltanweisung empfängt, die das Umschalten des mobilen Endgeräts in einen Sicherheitsmodus anweist; und
einem Steuermodul (21), das so konfiguriert ist, dass es eine Steuerverarbeitung auf dem mobilen Endgerät gemäß dem ersten Umschaltbefehl durchführt, um das mobile Endgerät in den Sicherheitsmodus umzuschalten, sodass am mobilen Endgerät deaktiviert wird, Dienstdaten an eine Basisstation zu übertragen, wobei
das Steuermodul (21) so konfiguriert ist, dass es einen Uplink-Dienstkanal des mobilen Endgeräts deaktiviert, um das mobile Endgerät in den Sicherheitsmodus zu schalten; und
das Steuergerät weiter Folgendes umfasst:
ein Eingabeaufforderungsmodul, das so konfiguriert ist, dass es, wenn das mobile Endgerät ein externes Signal von Downlink-Servicedaten der Basisstation empfängt, einen Benutzer fragt, ob er das mobile Endgerät vom Sicherheitsmodus in einen normalen Modus umschalten möchte;
**dadurch gekennzeichnet, dass** das Steuermodul ferner so konfiguriert ist, dass es einen Schritt einer Reihe von Verarbeitungen unterbricht, die von dem mobilen Endgerät an den Dienstdaten durchgeführt werden, bevor das mobile Endgerät die Dienstdaten an die Basisstation überträgt.

6. Steuervorrichtung für das mobile Endgerät nach Anspruch 5, wobei das Eingabemodul (20) ferner so konfiguriert ist, dass es eine zweite, vom Benutzer eingegebene Schaltanweisung empfängt, die das Umschalten des mobilen Endgerätes in den Normalmodus anweist, und
wobei das Steuermodul (21) ferner so konfiguriert ist, dass es einen Uplink-Servicekanal des mobilen Endgeräts gemäß dem zweiten Schaltbefehl freigibt, um das mobile Endgerät in den Normalmodus zu schalten.

7. Steuervorrichtung für das mobile Endgerät nach Anspruch 5, wobei die erste Schaltanweisung ein Passwort trägt, und
wobei das Steuermodul so konfiguriert ist, dass es das von der ersten Umschaltanweisung getragene Passwort gemäß einem voreingestellten Sperrpasswort verifiziert und den Uplink-Dienstkanal des mobilen Endgeräts sperrt, nachdem das von der ersten Umschaltanweisung getragene Passwort die Verifizierung bestanden hat.

8. Steuervorrichtung für das mobile Endgerät nach Anspruch 6, wobei die zweite Schaltanweisung ein Passwort trägt, und
wobei das Steuermodul so konfiguriert ist, dass es das von der zweiten Umschaltanweisung getragene Passwort gemäß einem voreingestellten Freigabepasswort verifiziert und den Uplink-Dienstkanal des mobilen Endgeräts freigibt, nachdem das von der zweiten Umschaltanweisung getragene Passwort die Verifizierung bestanden hat.

9. Mobiles Endgerät, das das Steuergerät nach einem der Ansprüche 5 bis 8 umfasst.

## Revendications

1. Procédé de commande pour un terminal mobile, comprenant :
la réception (101), par un dispositif de commande pour le terminal mobile, d'une première commande de commutation qui commande la commutation du terminal mobile à un mode de sécurité ; et
la réalisation (102), par le dispositif de commande pour le terminal mobile, du traitement de commande sur le terminal mobile selon la première commande de commutation pour commuter le terminal mobile au mode de sécurité, de manière à désactiver le terminal mobile pour transmettre des données de service à une station de base, où
la réalisation, par le dispositif de commande pour le terminal mobile, du traitement de commande sur le terminal mobile selon la première commande de commutation comprend :
la désactivation, par le dispositif de commande pour le terminal mobile, d'un canal de service en liaison montante du terminal mobile ; et
le procédé de commande comprend en outre :
après la désactivation, par le dispositif de commande pour le terminal mobile, du canal de service en liaison montante du terminal mobile, l'incitation, par le dispositif de commande pour le terminal mobile, d'un utilisateur à faire commuter le terminal mobile du mode de sécurité à un mode normal quand le terminal mobile reçoit un signal externe de données de service en liaison descendante de la station de base ;
**caractérisé en ce que** la réalisation, par le dispositif de commande pour le terminal mobile, du traitement de commande sur le terminal mobile selon la première commande de commutation comprend en outre :
avant la transmission, par le terminal mobile, des données de service à la station de base, l'interruption, par le dispositif de commande pour le terminal mobile, d'une étape d'une série de traitement, réalisée par le terminal mobile, sur les données de service.

2. Procédé de commande pour le terminal mobile selon la revendication 1, comprenant en outre :
après l'incitation de l'utilisateur à faire commuter le terminal mobile du mode de sécurité au mode normal,
la réception, par le dispositif de commande pour le terminal mobile, d'une seconde commande de commutation, entrée par l'utilisateur, qui commande la commutation du terminal mobile au mode normal ; et
l'activation, par le dispositif de commande pour le terminal mobile, du canal de service en liaison montante du terminal mobile selon la seconde commande de commutation, de manière à commuter le terminal mobile au mode normal.

3. Procédé de commande pour le terminal mobile selon la revendication 1, où la première commande de commutation porte un mot de passe, et
où la désactivation, par le dispositif de commande pour le terminal mobile, du canal de service en liaison montante du terminal mobile comprend :
la vérification, par le dispositif de commande pour le terminal mobile, du mot de passe porté par la première commande de commutation selon un mot de passe désactivé préétabli, et la désactivation du canal de service en liaison montante du terminal mobile après que le mot de passe porté par la première commande de commutation passe la vérification.

4. Procédé de commande pour le terminal mobile selon la revendication 2, où la seconde commande de commutation porte un mot de passe, et
où l'activation, par le dispositif de commande pour le terminal mobile, du canal de service en liaison montante du terminal mobile comprend :
la vérification, par le dispositif de commande pour le terminal mobile, du mot de passe porté par la seconde commande de commutation selon un mot de passe activé préétabli, et l'activation du canal de service en liaison montante du terminal mobile après que le mot de passe porté par la seconde commande de commutation passe la vérification.

5. Dispositif de commande pour un terminal mobile, comprenant :
un module d'entrée (20), configuré pour recevoir une première commande de commutation qui commande la commutation du terminal mobile à un mode de sécurité ; et
un module de commande (21), configuré pour réaliser un traitement de commande sur le terminal mobile selon la première commande de commutation pour commuter le terminal mobile au mode de sécurité, de manière à désactiver le terminal mobile pour transmettre des données de service à une station de base, où
le module de commande (21) est configuré pour désactiver un canal de service en liaison montante au terminal mobile de manière à commuter le terminal mobile au mode de sécurité ; et
le dispositif de commande comprend en outre :
un module d'incitation, configuré pour, quand le terminal mobile reçoit un signal externe des données de service en liaison descendante de la station de base, inciter un utilisateur à faire commuter le terminal mobile du mode de sécurité à un mode normal ;
**caractérisé en ce que** le module de commande est configuré en outre pour interrompre une étape d'une série de traitement réalisée par le terminal mobile sur les données de service avant que le terminal mobile transmet les données de service à la station de base.

6. Dispositif de commande pour le terminal mobile selon la revendication 5, où le module d'entrée (20) est en outre configuré pour recevoir une seconde commande de commutation, entrée par l'utilisateur, qui commande la commutation du terminal mobile au mode normal, et
où le module de commande (21) est configuré en outre pour activer un canal de service en liaison montante du terminal mobile selon la seconde commande de commutation, de manière à commuter le terminal mobile au mode normal.

7. Dispositif de commande pour le terminal mobile selon la revendication 5, où la première commande de commutation porte un mot de passe, et
où le module de commande est configuré pour vérifier le mot de passe porté par la première commande de commutation selon un mot de passe désactivé préétabli, et désactiver le canal de service en liaison montante du terminal mobile après que le mot de passe porté par la première commande de commutation passe la vérification.

8. Dispositif de commande pour le terminal mobile selon la revendication 6, où la seconde commande de commutation porte un mot de passe, et
où le module de commande est configuré pour vérifier le mot de passe porté par la seconde commande de commutation selon un mot de passe activé préétabli, et activer le canal de service en liaison montante du terminal mobile après que le mot de passe porté par la seconde commande de commutation passe la vérification.

9. Terminal mobile, comprenant le dispositif de commande selon l'une quelconque des revendications 5 à 8.
